# FASCICULE DE BREVET EUROPEEN

(11) **EP 2 162 477 B1**
(45) Date de publication et mention de la délivrance du brevet: **22.08.2012**
(21) Numéro de dépôt: 08806053.8
(22) Date de dépôt: 23.06.2008
(51) Int. Cl.: C08F 257/02, C08L 51/00, C09D 151/00

(54) **UTILISATION DE COPOLYMERES SMA GREFFES DANS DES COMPOSITIONS LIQUIDES**
VERWENDUNG VON GEPFROPFTEN SMA-COPOLYMEREN IN FLÜSSIGEN ZUSAMMENSETZUNGEN
USE OFGRAFTED SMA COPOLYMERS IN LIQUID COMPOSITIONS

(30) Priorité: 02.07.2007 FR 0756223
(43) Date de publication de la demande: 17.03.2010
(73) Titulaire: ARKEMA FRANCE, 92700 Colombes (FR)
(72) Inventeur: HIDALGO, Manuel, F-69530 Brignais (FR); GRIMALDI, Sandra, F-69110 Sainte-Foy-les-Lyon (FR)
(86) Numéro de dépôt international: PCT/FR2008/051121
(87) Numéro de publication internationale: WO 2009/004264

(56) Documents cités:
- EP-A- 0 810 323
- WO-A-02/48459
- US-A- 3 363 029
- US-A- 3 444 151
- US-A- 5 115 018

## Description

La présente invention se rapporte au domaine des additifs polymères à base de motifs styréniques et anhydride, constitués de chaînes macromoléculaires greffées par des molécules de type hétérocycles azotés. En particulier, elle concerne aussi les compositions comprenant de tels additifs ainsi que leurs utilisations en particulier dans le domaine de la papeterie. Les polymères comprenant des motifs issus du styrène ou d'un dérivé styrénique et des motifs issus d'un anhydride, en particulier l'anhydride maléique, sont appelés des SMA.

L'utilisation de copolymères SMA est bien connue dans la fabrication du papier.

En effet, les additifs polymères à base de motifs styréniques et anhydride, permettent d'améliorer les propriétés du papier telles que son hydrophobie, sa résistance à l'eau, son imprimabilité, son aspect de surface. Ces additifs sont souvent employés comme ingrédients dans des compositions liquides pour l'encollage ou le couchage du papier, dont ils peuvent également modifier favorablement la rhéologie en contribuant à diminuer la viscosité, notamment à haut cisaillement ou en contribuant à augmenter la concentration de charges ou de pigments. Ces compositions liquides utilisées pour traiter le papier lors de sa fabrication sont des suspensions aqueuses de charges ou de pigments pouvant contenir également un liant et d'autres additifs.

La demande WO 02/48459 fait état de polymères issus de la polymérisation du styrène et de l'anhydride maléique entrant dans la formulation de compositions utilisées pour le couchage du papier dans des procédés à grande vitesse.

Toutefois les copolymères à base de motifs styréniques et anhydride ne permettent pas de répondre à certains problèmes rencontrés dans la fabrication du papier en particulier.

La demanderesse a maintenant trouvé que le greffage de copolymères à base de motifs styréniques et anhydride par des molécules comprenant des hétérocycles azotés comme par exemple l'UDETA permettait de régler la balance hydrophile-hydrophobe du copolymère permettant, par exemple de mieux dissoudre des copolymères riches en styrène, ce qui se traduit par une amélioration des propriétés d'hydrophobie du papier traité. De plus, le greffage avec des molécules comprenant des hétérocycles azotés comme l'UDETA apporte une meilleure compatibilité avec des fibres de cellulose et favorise la dispersion de pigments et/ou de charges dans des compositions liquides utilisées pour la fabrication du papier. De manière similaire, dans les autres applications selon l'invention, de meilleurs tensioactifs et dispersants peuvent être obtenus grâce au greffage de molécules comme l'UDETA sur des copolymères à base de motifs styréniques et anhydride.

L'additif polymère selon l'invention est un copolymère greffé issu du greffage:
- d'un copolymère SMA (II) issu de la copolymérisation d'au moins deux monomères, (i) le premier monomère étant choisi parmi le styrène et ses dérivés et (ii) le second monomère comportant au moins une fonction anhydride,
- avec soit (iii) des molécules M-R-X (I) comportant au moins un motif (M) choisi parmi les motifs (1) à (4) : 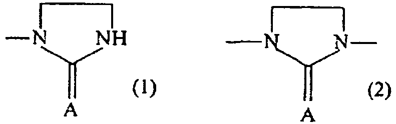 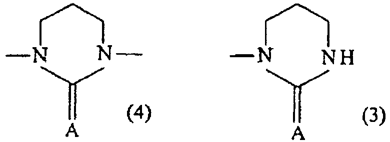
avec A = oxygène, soufre ou NH ;
et comportant au moins une fonction chimique (X) choisie parmi un halogène, une fonction amine primaire ou secondaire, une fonction alcool, une fonction thiol, une fonction acide carboxylique ou un dérivé de cette fonction et une fonction époxy, le motif (M) et ladite fonction (X) étant reliés par une chaîne rigide ou flexible (R) ;
soit (iv) des molécules appartenant à la famille des triazoles.

Dans le cas du copolymère SMA (II), des motifs issus d'autres monomères peuvent également être présents sans que cela exclue ces polymères de la désignation SMA. Les copolymères SMA peuvent également être associés par liaison covalente à d'autres polymères, notamment à des polymères élastomériques qui peuvent se trouver liés chimiquement aux SMA. Les motifs anhydrides restant un site réactif ou fonctionnel du copolymère, ils peuvent être impliqués dans une réaction chimique avec d'autres types de molécules.

Lorsque les groupes anhydrides auront participé à une réaction quelconque de modification impliquant l'ouverture des groupes anhydrides, le produit résultant est appelé un SMA modifié ou un dérivé par fonctionnalisation du SMA. Il paraît également pertinent de préciser que, lors de la dissolution dans des milieux aqueux d'un copolymère de SMA, l'ajout d'une base minérale ou organique, le plus souvent une amine pour cette dernière, est une pratique courante. Dans ce cas, les groupes anhydrides peuvent s'ouvrir et former des sels d'acide carboxylique avec la base organique ou minérale. Cette salification entraîne ou favorise la solubilisation du copolymère de SMA. La modification des copolymères SMA (II) par greffage des molécules (I) selon l'invention ne correspond pas simplement à une réaction de salification acide-base, mais plutôt à un vrai greffage chimique des molécules (I) sur le copolymère (II) qui est effectué préalablement à l'utilisation de l'additif SMA modifié, dans une étape distincte de greffage effectuée en solution dans un solvant approprié avec séparation subséquente du copolymère greffé ou à l'état fondu, sans solvant, et tel que cela peut se faire dans des équipements de transformation de polymères thermoplastiques, bien connus de l'homme du métier, comme des extrudeuses, des calandreuses et autres mélangeurs.

Le copolymère SMA (II) est issu de la copolymérisation d'au moins deux monomères différents à savoir un monomère styrénique, de préférence le styrène et un monomère comportant une fonction anhydride, de préférence l'anhydride maléique. Les copolymères SMA peuvent également être issus de copolymérisations avec un ou plusieurs autres monomères supplémentaires comme par exemple des comonomères acryliques tels que les (méth)acrylates d'alkyle. Les copolymères SMA peuvent également être associés par liaison chimique à d'autres polymères, notamment à des polymères élastomériques.

Le copolymère SMA (II) est issu de la copolymérisation d'un mélange de monomères comprenant entre 0,5 et 65% de monomères comportant une fonction anhydride (% en poids par rapport au mélange total de monomères).

Les masses moléculaires du copolymère SMA selon l'invention peuvent varier entre 500 et 500 000 daltons pour la masse moléculaire moyenne en nombre, Mn. De préférence, les copolymères SMA utiles pour l'invention ont des masses moléculaires moyennes en nombre comprises entre 2000 et 100 000 daltons.

Le rapport entre motifs styréniques et motifs anhydride peut varier entre 0,6 pour 1 et 29 pour 1 et de préférence, entre 1 pour 1 et 6 pour 1.

La molécule M-R-X (I) est issue de la réaction de l'urée avec au moins un composé choisi parmi les alkylèneamines, les amines, les aminoalcools et les amides. Avantageusement, ledit composé comprend au moins une fonction amine primaire (-NH2) et au moins une fonction amine secondaire (- NH-), lesdites fonctions étant reliées par une chaîne carbonée comprenant au moins 2 atomes de carbone. La chaîne rigide ou flexible, (R) est une chaîne hydrocarbonée qui peut être porteuse d'un ou plusieurs hétéroéléments. Il pourra s'agir d'une chaîne hydrocarbonée linéaire ou ramifiée composée de un à 30 atomes de carbone, d'un cycle ou d'une succession d'éléments alkyl ou aryl, unis par des ponts -C(O)O-, OC(O), C(O), -O-, -S-, -NH-.

On peut citer, par exemple :
- la molécule UTETA : 1-(2-[(2-aminoéthyl)amino]éthyl)imidazolidin-2-one issue de la réaction de l'urée avec la triéthylène tétramine (TETA) ; 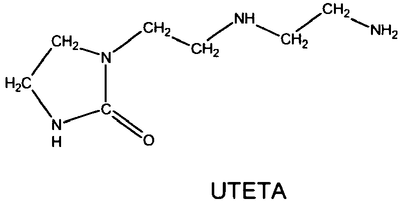
- la molécule UTEPA:1-(2-{2-[(2-aminoéthylamino]éthyl}amino)éthyl]imidazolidin-2-one issue de la réaction de l'urée avec la tétraéthylène pentamine (TEPA) ; 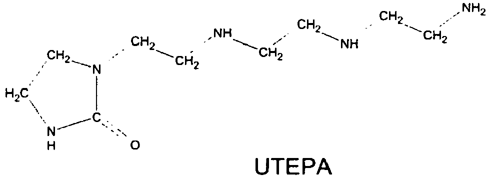
- la molécule UDETA : 2-aminoéthylimidazolidinone ou 1-(2-aminoéthyl)imidazolidin-2-one issue de la réaction de l'urée avec la diéthylène triamine (DETA) ; 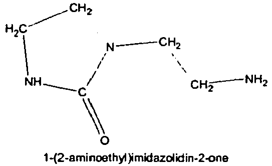
- la molécule UDETA (formule ci-dessous): 2-aminoéthylimidazolidinone ou 1-(2-aminoéthyl)imidazolidin-2-one issue de la réaction de l'urée avec la diéthylène triamine (DETA).

Avantageusement, la fonction (X) de la molécule (I) est une fonction amine primaire ou secondaire.

Avantageusement, le motif (M) de la molécule (I) est le motif (1) qui est un hétérocycle de type imidazolidone avec A=oxygène.

Avantageusement, la molécule (I) est le 1-(2-aminoethyl)imidazolidin-2-one ou UDETA

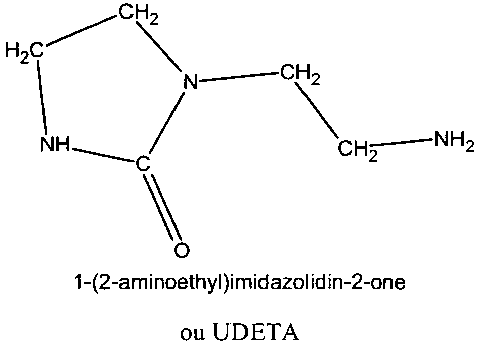

Concernant les molécules de la famille des triazoles, on peut citer :
- le 4-amino-1,2,4-triazole 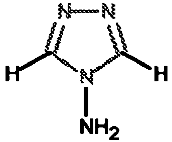
- le 3-amino-1,2,4-triazole

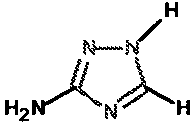

La réaction entre les molécules (I) et le copolymère (II) peut se faire en solution ou à l'état fondu. Les molécules (I) et le copolymère (II) peuvent être mis en solution dans un solvant approprié, comme le chloroforme, en choisissant la température de réaction de manière à ce que la réaction se produise dans un temps raisonnable allant de quelques minutes a quelques heures. Ou alors, les molécules (I) peuvent être mises en contact avec le copolymère (II) à l'état fondu, sans solvant, et tel que cela peut se faire dans des équipements de transformation de polymères thermoplastiques, bien connus de l'homme du métier, comme des extrudeuses, des calandreuses et autres mélangeurs.

Concernant les utilisations des polymères SMA modifiés selon l'invention, on peut citer les utilisations suivantes:
- en tant qu'additif dans le domaine de la fabrication du papier. L'additif est un ingrédient de compositions liquides appliquées dans ou sur le papier. Ces compositions peuvent être utilisées dans le collage ou le couchage du papier. Elles peuvent aussi être utilisées dans le cadre de procédé de finitions du papier par exemple pour revêtir des feuilles de papier en vu de faciliter une impression ultérieure sur le papier. Cet additif améliore ainsi les caractéristiques du papier couché en terme d'imprimabilité, de rendu de couleurs, de résolution, de tenue mécanique et de touché. On obtient un compromis intéressant entre la résistance et la flexibilité du papier couché revêtu avec un revêtement additivé avec l'additif selon l'invention et une bonne adhésion d'une ou plusieurs couches de revêtement sur le papier. De plus, grâce à cet additif, on a une meilleure résolution d'impression. Il procure également au papier une résistance, en particulier à l'eau (pour rendre le papier hydrophobe), aux graisses ou à d'autres substances. Il améliore la rétention d'eau dans le papier (compatibilité eau / liant et charges ou pigments).
- en tant que composé majoritaire ou en tant qu'additif pour l'élaboration de revêtements ou de compositions liquides applicables sur des surfaces telles que des sols, en particulier sur des sols en carrelage ou parquetés afin de leurs donner un aspect brillant et neuf. Ces revêtements présentent une bonne adhérence sur leur support et une bonne tenue mécanique ce qui constitue un avantage sur des supports sollicités tels que des sols par exemple.
- en tant que tensioactif notamment pour la stabilisation de polymérisations en milieu dispersé comme en émulsion directe et inverse (classique, mini-émulsion, microémulsion), en suspension directe et inverse et en dispersion ou précipitant. Voir le chapitre 7 du livre Les latex synthétiques. Elaboration-Propriétés-Applications coordonné par Jean-Claude Daniel et Christian Pichot. Editions Tec&Doc Lavoisier 2006 ISBN 2-7430-0741-9 pour une description des différents types de polymérisations en milieu dispersé.

- en tant que co-tensioactif: - pour fabriquer des compositions aqueuses d'encres, de peintures ou de vernis lors de la synthèse de liants acryliques par polymérisation en émulsion applicables ;
   - pour fabriquer des liants ou des revêtements pour le cuir ou les textiles tissés ou non-tissés.
- en tant que dispersant de pigments minéraux ou organiques notamment dans des compositions d'encres. Il facilite de plus le broyage de pigments.
- en tant que dispersant de charges minérales comme le carbonate de calcium, le kaolin, le dioxyde de titane ou le ciment, dans des compositions tels que des coulis, des mortiers, des bétons, des peintures et des vernis. Il peut aussi s'agire d'un dispersant dans autre type de revêtements (revêtement pour feuilles de papier par exemple).
- en tant que composé majoritaire ou additif de compositions liquides destinées à être appliquées dans ou sur des feuilles de papier ou carton, sur des surfaces dures, sur du cuir ou sur des textiles.

De préférence, les feuilles de papier sont des feuilles de papier d'impression-écriture ou de papier d'emballage, en particulier de papier d'emballage réalisé à partir de pâte à papier mécanique désencrée ou de pâte à papier recyclée.

De préférence, les surfaces dures sont choisies parmi les sols, les murs et les plafonds.
Les exemples qui suivent illustrent l'invention:

### Exemple 1 : Greffage d'un copolymère SMA en extrudeuse avec de l'UDETA

Le copolymère SMA avant greffage est un produit ALDRICH® contenant 14% en poids d'anhydride maléique. Sa masse moléculaire moyenne en nombre, Mn, est de 85000 g/mole et sa masse moléculaire moyenne en poids, Mw, est de 188000 g/mole. Le greffage est réalisé dans une micro-extrudeuse DSM Micro 15 Compounder sous courant d'azote. Le SMA est préalablement traité à 120°C pendant 12 heures dans une étuve sous vide de manière à reformer les anhydrides susceptibles de s'être hydrolysés. 12 g du SMA sont alors mélangés avec 400 mg d'UDETA de pureté molaire supérieure à 85%. La température d'extrusion est de 220°C pour des vis tournant à 50 tours par minute. Le matériau garde une bonne processabilité

### Analyse thermique :

Des échantillons de SMA greffé et SMA non greffé de 10 mg chacun sont analysés par calorimétrie à l'aide d'un appareil DSC TA Q1000 opérant dans le mode T4. Les températures de transition vitreuse de ces deux matériaux sont estimées avec des vitesses d'échauffement et refroidissement de 10°C/min. Le SMA greffé présente une température de transition vitreuse de 5,4°C plus élevée que le SMA non greffé (respectivement 135,5°C et 130,1 °C).

### Exemple 2 : Greffage d'un copolymère SMA en extrudeuse avec une plus faible quantité d'UDETA

Le copolymère SMA avant greffage est le même que celui de l'exemple 1. Le greffage est réalisé dans une micro-extrudeuse DSM Micro 15 Compounder sous courant d'azote. Le SMA est préalablement traité à 120°C pendant 12 heures dans une étuve sous vide de manière à reformer les anhydrides susceptibles de s'être hydrolysés. 12 g du SMA sont alors mélangés avec 170 mg d'UDETA de pureté molaire supérieure à 85%. La température d'extrusion est de 220°C pour des vis tournant à 50 tours par minute. Le matériau garde une bonne processabilité

### Analyse thermique :

Des échantillons de SMA greffé et SMA non greffé de 10 mg chacun sont analysés par calorimétrie à l'aide d'un appareil DSC TA Q1000 opérant dans le mode T4. Les températures de transition vitreuse de ces deux matériaux sont estimées avec des vitesses d'échauffement et refroidissement de 10°C/min. Le SMA greffé présente une température de transition vitreuse de 2,7°C plus élevée que le SMA non greffé (respectivement 132,7°C et 130,1°C).

### Exemple 3 : Effet hydrophobant sur du papier

Les polymères des exemples 1 et 2 sont mis en dispersion aqueuse à 5% en poids dans de l'eau déminéralisé et sous agitation. La dispersion de polymère est mélangée à une pâte de fibres de papier raffinées à 35° SR et à un agent polymère cationique (dit agent de rétention) utilisé pour la fabrication en formette de feuilles de papier, le poly DADMAC (polychlorure de diallyldiméthylammonium), à hauteur de 0,3% en poids par rapport aux fibres. La quantité de dispersion de polymère greffé selon l'invention est ajustée pour que la quantité de polymère soit de l'ordre de 5% par rapport aux fibres. La suspension est, ensuite passée à travers une formette de laboratoire pour obtenir des feuilles de papier de 60 à 70 g/m2 et d'une épaisseur de 80 à 100 microns. En tant que référence, des feuilles ne contenant pas les polymères des exemples 1 et 2, mais contenant le polyDADMAC, sont fabriquées.

L'hydrophobie du papier ainsi fabriqué est obtenue à partir d'un test COBB, bien connu de l'homme du métier et qui procède selon la norme NF EN 20535 -ISO 535; les résultats comparatifs entre les feuilles de papier de référence et celles contenant le polymère greffé selon l'invention sont montrés dans le tableau 1 :

| | |
|---|---|
| Valeur COBB (g/m2) | |
| Pâte de référence | 160 |
| Avec Polymère Ex. 1 | 100 |
| Avec Polymère Ex ; 2 | 80 |

L'effet hydrophobant du polymère se traduit par une diminution de la valeur COBB

### Exemple 4: Greffage d'un copolymère SMA de faible masse moléculaire et propriétés tensioactives du polymère résultant

Le copolymère SMA avant greffage est un produit SARTOMER SMA 1000 comportant un ratio de motifs styrène : anhydride maléique de 1 :1. Des granulés de SMA 1000 sont broyés au mortier ou dans un broyeur pour avoir une poudre fine qui est ensuite traitée à 120°C pendant 12 heures dans une étuve sous vide de manière à reformer les anhydrides susceptibles de s'être hydrolisés. 12 g de cette poudre sont mélangés à 170 mg d'UDETA de pureté molaire supérieure à 85% dans une micro-extrudeuse DSM Micro 15 Compounder sous courant d'azote. L'extrusion s'effectue à 220°C et 50 tours par minute. Le matériau est très fluide.

Dans le but de déterminer les propriétés tensioactives de solutions aqueuses diluées du copolymère greffé de l'Exemple 1, une solution aqueuse dans de l'eau déminéralisée est préparée à 1 % en poids de ce copolymère greffé. Cette solution est filtrée avec un filtre de 0,8 microns. Ensuite, des solutions à 0,1%, 0,05%, 0,01% et 0,001 % en poids sont préparées par dilution successive de la solution à 1 % filtrée. Les tensions superficielles de ces solutions sont mesurées à l'aide d'un appareil tensiomètre à goutte de la marque Tracker®, piloté par un logiciel Windrop® avec une aiguille de 20 microns de diamètre. Le tableau 2 présente le résultat des mesures réalisées.

**Tableau 2**

| Conc(%) | 0,0010 | 0,010 | 0,045 | 0,10 | 1,0 |
|---|---|---|---|---|---|
| Tension (mN/m) | 69 | 69 | 67 | 58 | 45 |

Il ressort de ce tableau que le copolymère greffé de l'Exemple 1 présente des propriétés tensioactives associées à un caractère amphiphile. Il peut donc être utile pour conférer une certaine hydrophobie à des feuilles de papier ou de carton tout en permettant, grâce à sa partie hydrophile, de bien disperser les charges et pigments et en ayant une bonne affinité avec les fibres de cellulose (hydrophiles) constituant le papier.

## Revendications

1. Utilisation d'un copolymère greffé issu du greffage:
• d'un copolymère SMA (II) issu de la copolymérisation d'au moins deux monomères, (i) le premier monomère étant choisi parmi le styrène et ses dérivés et (ii) le second monomère comportant au moins une fonction anhydride,
• avec soit (iii) des molécules M-R-X (I) comportant au moins un motif (M) choisi parmi les motifs (1) à (4) : 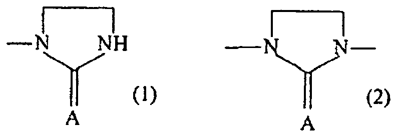 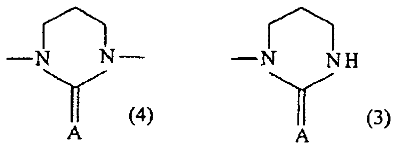 avec A = oxygène, soufre ou NH ;
et comportant au moins une fonction chimique (X) choisie parmi un halogène, une fonction amine primaire ou secondaire, une fonction alcool, une fonction thiol, une fonction acide carboxylique ou un dérivé de cette fonction et une fonction époxy, le motif (M) et ladite fonction (X) étant reliés par une chaîne rigide ou flexible (R) ;
soit (iv) des molécules appartenant à la famille des triazoles ;
en tant que composé majoritaire ou additif de compositions liquides destinées à être appliquées dans ou sur des feuilles de papier ou carton, sur des surfaces dures, sur du cuir ou sur des textiles.

2. Utilisation selon la revendication 1, **caractérisé en ce que** les feuilles de papier sont des feuilles de papier d'impression-écriture ou de papier d'emballage, en particulier de papier d'emballage réalisé à partir de pâte à papier mécanique désencrée ou de pâte à papier recyclée.

3. Utilisation selon la revendication 1, **caractérisé en ce que** les surfaces dures sont choisies parmi les sols, les murs et les plafonds.

4. Utilisation selon l'une des revendications 1 à 3, **caractérisée en ce que** c'est un additif de compositions liquides aqueuses d'encres, de peintures ou de vernis.

5. Utilisation selon la revendication 4, **caractérisée en ce que** l'additif est un tensioactif ou un co-tensioactif.

6. Utilisation selon la revendication 4, **caractérisée en ce que** l'additif est un dispersant de pigments minéraux ou organiques et/ou de charges minérales.

7. Utilisation selon la revendication 6, **caractérisée en ce que** l'additif est un dispersant de charge minérale choisie parmi le carbonate de calcium, le kaolin, le dioxyde de titane et le ciment.

8. Utilisation selon l'une des revendications 6 ou 7, **caractérisée en ce que** l'additif est un dispersant dans une composition choisie parmi les coulis, les mortiers et les bétons.

9. Utilisation selon l'une des revendications précédentes, **caractérisé en ce que** le copolymère SMA (II) est issu de la copolymérisation d'un mélange de monomères comprenant entre 0,5 et 65% de monomères comportant une fonction anhydride (% en poids par rapport au mélange total de monomères).

10. Utilisation selon l'une des revendications précédentes, **caractérisé en ce que** la masse moléculaire moyenne en nombre (Mn) du copolymère SMA (II) varie entre 500 et 500 000 daltons, de préférence entre 2 000 et 100 000 daltons.

11. Utilisation selon l'une des revendications précédentes, **caractérisé en ce que** le monomère comportant une fonction anhydride est l'anhydride maléique.

12. Utilisation selon l'une des revendications précédentes, **caractérisé en ce que** les molécules (I) sont issues de la réaction de l'urée avec au moins un composé choisi parmi les alkylèneamines, les amines, les aminoalcools et les amides.

13. Utilisation selon l'une des revendications précédentes, **caractérisé en ce que** les molécules (I) sont issues de la réaction de l'urée avec au moins un composé contenant au moins une fonction amine primaire (-NH2) et au moins une fonction amine secondaire (- NH-), lesdites fonctions étant reliées par une chaîne carbonée comprenant au moins 2 atomes de carbone.

14. Utilisation selon l'une des revendications précédentes, **caractérisé en ce que** la fonction (X) est une fonction amine primaire ou secondaire.

15. Utilisation selon l'une des revendications précédentes, **caractérisé en ce que** le motif (M) de la molécule (I) est le motif (1) qui est un hétérocycle de type imidazolidone avec A=oxygène.

16. Utilisation selon l'une des revendications précédentes, **caractérisé en ce que** la molécule (I) est le 1-(2-aminoethyl)imidazolidin-2-one ou UDETA

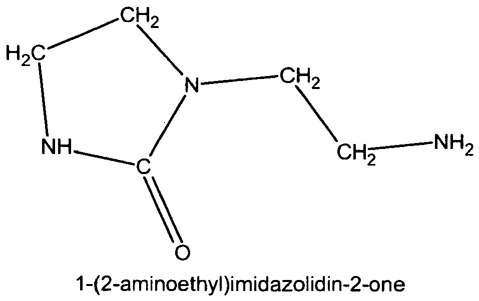

17. Utilisation selon l'une des revendications 1 à 11, **caractérisé en ce que** la famille des triazoles est constituée par le 4-amino-1,2,4-triazole et le 3-amino-1,2,4-triazole.

## Claims

1. The use of a graft copolymer derived from the grafting:
• of an SMA copolymer (II) derived from the copolymerization of at least two monomers, (i) the first monomer being chosen from styrene and derivatives thereof and (ii) the second monomer comprising at least one anhydride functional group;
• with either (iii) M-R-X molecules (I) comprising at least one unit (M) chosen from the units (1) to (4): 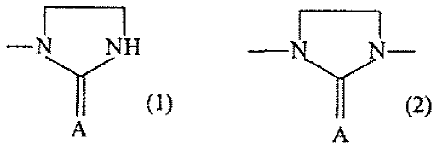 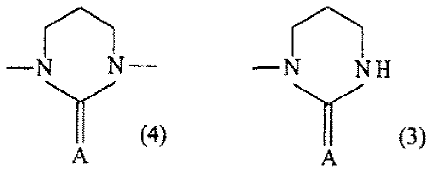 with A = oxygen, sulfur or NH;
and comprising at least one chemical functional group (X) chosen from a halogen, a primary or secondary amine functional group, an alcohol functional group, a thiol functional group, a carboxylic acid functional group or a derivative of this functional group and an epoxy functional group, the unit (M) and said functional group (X) being joined by a rigid or flexible chain (R);
or (iv) molecules belonging to the family of triazoles;
as the predominant compound or additive of liquid compositions intended to be applied in or on sheets of paper or cardboard, onto hard surfaces, onto leather or onto textiles.

2. The use as claimed in claim 1, wherein the sheets of paper are sheets of printing/writing paper or of wrapping paper, in particular of wrapping paper produced from deinked mechanical paper pulp or from recycled paper pulp.

3. The use as claimed in claim 1, wherein the hard surfaces are chosen from floors, walls and ceilings.

4. The use as claimed in one of claims 1 to 3, wherein it is an additive of aqueous liquid compositions of inks, of paints or of varnishes.

5. The use as claimed in claim 4, wherein the additive is a surfactant or a co-surfactant.

6. The use as claimed in claim 4, wherein the additive is a dispersant of mineral or organic pigments and/or of mineral fillers.

7. The use as claimed in claim 6, wherein the additive is a mineral filler dispersant chosen from calcium carbonate, kaolin, titanium dioxide and cement.

8. The use as claimed in either of claims 6 and 7, wherein the additive is a dispersant in a composition chosen from grouts, mortars and concretes.

9. The use as claimed in one of the preceding claims, wherein the SMA copolymer (II) is derived from the copolymerization of a mixture of monomers comprising between 0.5 and 65% of monomers comprising an anhydride functional group (% by weight relative to the total mixture of monomers).

10. The use as claimed in one of the preceding claims, wherein the number-average molecular weight (Mₙ) of the SMA copolymer (II) varies between 500 and 500 000 daltons, preferably between 2000 and 100 000 daltons.

11. The use as claimed in one of the preceding claims, wherein the monomer comprising an anhydride functional group is maleic anhydride.

12. The use as claimed in one of the preceding claims, wherein the molecules (I) are derived from the reaction of urea with at least one compound chosen from alkyleneamines, amines, amino alcohols and amides.

13. The use as claimed in one of the preceding claims, wherein the molecules (I) are derived from the reaction of urea with at least one compound containing at least one primary amine functional group (-NH₂) and at least one secondary amine functional group (-NH-), said functional groups being joined by a carbon-based chain comprising at least 2 carbon atoms.

14. The use as claimed in one of the preceding claims, wherein the functional group (X) is a primary or secondary amine functional group.

15. The use as claimed in one of the preceding claims, wherein the unit (M) of the molecule (I) is the unit (1) which is a heterocycle of imidazolidone type with A=oxygen.

16. The use as claimed in one of the preceding claims, wherein the molecule (I) is 1- (2-aminoethyl)imidazolidin-2-one or UDETA:

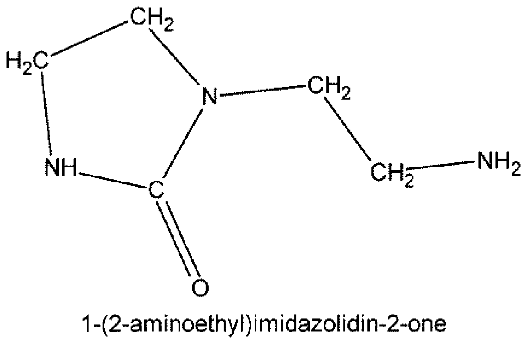

17. The use as claimed in one of claims 1 to 11, wherein the family of triazoles is constituted by 4-amino-1,2,4-triazole and 3-amino-1,2,4-triazole.

## Patentansprüche

1. Verwendung eines aus dem Pfropfen:
• eines aus der Copolymerisation von mindestens zwei Monomeren hervorgegangenen SMA-Copolymers (II), wobei (i) das erste Monomer unter Styrol und Derivaten davon ausgewählt ist und (ii) das zweite Monomer mindestens eine Anhydridfunktion umfasst,
• mit entweder (iii) Molekülen M-R-X (I) mit mindestens einer Einheit (M), die unter den Einheiten (1) bis (4) : 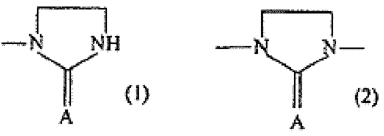 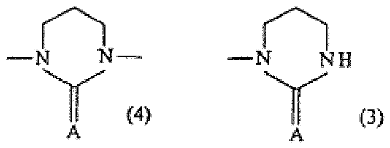 mit A = Sauerstoff, Schwefel oder NH ausgewählt ist,
und mindestens einer chemischen Funktion (X), die unter einem Halogen, einer primären oder sekundären Aminfunktion, einer Alkoholfunktion, einer Thiolfunktion, einer Carbonsäurefunktion oder einem Derivat dieser Funktion und einer Epoxidfunktion ausgewählt ist, wobei die Einheit (M) und die Funktion (X) durch eine starre oder flexible Kette (R) verknüpft sind;
oder (iv) Molekülen aus der Familie der Triazole;
hervorgegangenen Pfropfcopolymers als Hauptverbindung oder Additiv von flüssigen Zusammensetzungen, die zum Aufbringen auf Bögen von Papier oder Karton, auf harte Oberflächen, auf Leder oder auf Textilien bestimmt sind.

2. Verwendung nach Anspruch 1, **dadurch gekennzeichnet, dass** es sich bei den Bögen von Papier um Bögen von Druck- und Schreibpapier oder Packpapier, insbesondere aus deinktem mechanischem Halbstoff oder Altpapierhalbstoff hergestelltem Packpapier, handelt.

3. Verwendung nach Anspruch 1, **dadurch gekennzeichnet, dass** die harten Oberflächen unter Böden, Wänden und Decken ausgewählt sind.

4. Verwendung nach einem der Ansprüche 1 bis 3, **dadurch gekennzeichnet, dass** es sich um ein Additiv von wässrigen flüssigen Tinten-, Farbenoder Lackzusammensetzungen handelt.

5. Verwendung nach Anspruch 4, **dadurch gekennzeichnet, dass** es sich bei dem Additiv um ein Tensid oder ein Cotensid handelt.

6. Verwendung nach Anspruch 4, **dadurch gekennzeichnet, dass** es sich bei dem Additiv um ein Dispergiermittel für anorganische oder organische Pigmente und/oder anorganische Füllstoffe handelt.

7. Verwendung nach Anspruch 6, **dadurch gekennzeichnet, dass** es sich bei dem Additiv um ein Dispergiermittel für anorganische Füllstoffe, die unter Calciumcarbonat, Kaolin, Titandioxid und Zement ausgewählt sind, handelt.

8. Verwendung nach Anspruch 6 oder 7, **dadurch gekennzeichnet, dass** es sich bei dem Additiv um ein Dispergiermittel in einer Zusammensetzung, die unter Fugenkitten, Mörteln und Betonen ausgewählt ist, handelt.

9. Verwendung nach einem der vorhergehenden Ansprüche, **dadurch gekennzeichnet, dass** das SMA-Copolymer (II) aus der Copolymerisation einer Monomerenmischung mit zwischen 0,5 und 65% Monomeren mit einer Anhydridfunktion (Gew.-%, bezogen auf die gesamte Monomerenmischung) hervorgegangen ist.

10. Verwendung nach einem der vorhergehenden Ansprüche, **dadurch gekennzeichnet, dass** das zahlenmittlere Molekulargewicht (Mn) des SMA-Copolymers (II) zwischen 500 und 500.000 Dalton, vorzugsweise zwischen 2000 und 100.000 Dalton, variiert.

11. Verwendung nach einem der vorhergehenden Ansprüche, **dadurch gekennzeichnet, dass** es sich bei dem Monomer mit einer Anhydridfunktion um Maleinsäureanhydrid handelt.

12. Verwendung nach einem der vorhergehenden Ansprüche, **dadurch gekennzeichnet, dass** die Moleküle (I) aus der Umsetzung von Harnstoff mit mindestens einer unter Alkylenaminen, Aminen, Aminoalkoholen und Amiden ausgewählten Verbindung hervorgegangen sind.

13. Verwendung nach einem der vorhergehenden Ansprüche, **dadurch gekennzeichnet, dass** die Moleküle (I) aus der Umsetzung von Harnstoff mit mindestens einer Verbindung mit mindestens einer primären Aminfunktion (-NH2) und mindestens einer sekundären Aminfunktion (-NH-), wobei die Funktionen durch eine auf Kohlenstoff basierende Kette mit mindestens 2 Kohlenstoffatomen verknüpft sind, hervorgegangen sind.

14. Verwendung nach einem der vorhergehenden Ansprüche, **dadurch gekennzeichnet, dass** es sich bei der Funktion (X) um eine primäre oder sekundäre Aminfunktion handelt.

15. Verwendung nach einem der vorhergehenden Ansprüche, **dadurch gekennzeichnet, dass** die Einheit (M) des Moleküls (I) die Einheit (1), bei der es sich um einen Heterocyclus vom Imidazoltyp mit A=Sauerstoff handelt, ist.

16. Verwendung nach einem der vorhergehenden Ansprüche, **dadurch gekennzeichnet, dass** es sich bei dem Molekül (I) um 1- (2-Aminoethyl) imidazolin-2-on bzw. UDETA handelt:

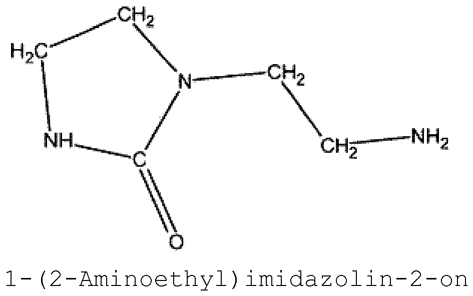

17. Verwendung nach einem der Ansprüche 1 bis 11, **dadurch gekennzeichnet, dass** die Familie der Triazole aus 4-Amino-1,2,4-triazol und 3-Amino-1,2,4-triazol besteht.
